# EUROPÄISCHE PATENTSCHRIFT

(11) **EP 3 566 557 B1**
(45) Veröffentlichungstag und Bekanntmachung des Hinweises auf die Patenterteilung: **23.08.2023**
(21) Anmeldenummer: 18171241.5
(22) Anmeldetag: 08.05.2018
(51) Int. Cl.: A01B 73/04, A01B 63/32, A01B 61/04, A01D 78/10

(54) **LANDWIRTSCHAFTLICHE MASCHINE**
AGRICULTURAL MACHINE
ENGIN AGRICOLE

(43) Veröffentlichungstag der Anmeldung: 13.11.2019
(73) Patentinhaber: Kverneland Group Kerteminde AS, 5300 Kerteminde (DK)
(72) Erfinder: Gohl, Stefan, 5300 Kerteminde (DK); Leute, Manuel, 5300 Kerteminde (DK); Ritter, Markus, 5300 Kerteminde (DK); Bier, Klemens, 5300 Kerteminde (DK)
(74) Vertreter: Grünecker Patent- und Rechtsanwälte PartG mbB

(56) Entgegenhaltungen:
- EP-A1- 0 788 730
- EP-A1- 3 254 546
- EP-A2- 0 872 170
- EP-A2- 1 097 622
- DE-A1-102014 018 133

## Beschreibung

Die Erfindung betrifft eine landwirtschaftliche Maschine gemäß Oberbegriff des Patentanspruchs 1.

Bei einer gattungsgemäßen landwirtschaftlichen Maschine gemäß EP 3 254 546 A1 werden die Hubarme mittels doppelt wirkender Hydraulikzylinder verstellt und wird für ein in Arbeitsstellung auf dem Boden verbliebenes Werkzeug bei Einzelaushub des anderen Werkzeugs der Entlastungsdruck für den Hydraulikzylinder durch einen Eingriff der Steuereinrichtung von außen eingestellt, in dem in der Arbeitsleitung zu einer Zylinderkammer ein Drucksensor und beim Hydraulikzylinder ein Winkelgeber verbaut sind, die an die übergeordnete Steuereinrichtung angeschlossen sind, die über das Steuergerät den Entlastungsdruck einspeist. Dazu sind eine Umlaufschaltung für drucklosen Umlauf oder eine Load-Sensing-Schaltung sowie eine elektronische Sensorsteuerung erforderlich. Dies bedeutet erheblichen Kostenmehraufwand und akute Fehlerstellen im System, was unter den groben Arbeitsbedingungen landwirtschaftlicher Maschinen kritisch sein kann.

Bei einer landwirtschaftlichen Maschine gemäß EP 0 788 730 A1 sind in den Arbeitsstellungen beider Rechkreisel auf dem Boden die zugeordneten Hydraulikzylinder drucklos geschaltet, das heißt ein Entlastungsdruck der Rechkreisel ist nicht vorgesehen.

Aus EP 1 097 622 A2 ist es bekannt, ein einzelnes Werkzeug, beispielsweise ein Mähwerk, direkt an Anlenkpunkten des Traktors abzustützen und über zwei an den Anlenkpunkten angreifende Hydraulikzylinder auszuheben und in der Höhenlage einzustellen.

Bei einer aus DE-C-10 2015 006 016 bekannten Heuwerbungsmaschine sind zur Entlastung der Rechkreisel vorgespannte Zugfedern verbaut, deren Vorspannung bei Änderung der Wirklänge der Hubarme durch Hydraulikzylinder verstellt wird. Diese Hydraulikzylinder sind in einer Folgesteuerung die Wirklänge ändernden Stelltrieben zugeordnet.

Bei solchen landwirtschaftlichen Maschinen, z.B. Kreiselschwadern, wird der Einzelaushub beispielsweise am Vorgewende eingesteuert, damit das Werkzeug einen bereits gelegten Schwad nicht überfährt und/oder eine enge Kurve gefahren werden kann. Falls die landwirtschaftliche Maschine dann an einem Hang in Schräglage einer bestimmten Linie zu folgen versucht, wird durch das zum Beispiel auf der Talseite ausgehobene Werkzeug ein Kippmoment am Fahrwerk des Tragrahmens erzeugt, das unter ungünstigen Umständen sogar zum Abheben des dem ausgehobenen Werkzeug entgegengesetzten, bergseitigen Laufrads des Fahrwerks führen kann, wodurch die landwirtschaftliche Maschine am Hang seitlich abdriftet, da die Bodenlaufräder des in Arbeitsstellung verbliebenen anderen Werkzeugs als Nachlaufräder keine nennenswerte Führungsaufgabe übernehmen können. Aus diesem Grund wird in dem Hydraulikzylinder des in Arbeitsstellung verbliebenen Werkzeugs der Entlastungsdruck eingesteuert, der über den Hubarm der entlasteten Seite des Haupt-Fahrwerks des Tragrahmens ein Stützmoment erzeugt, das die Kippneigung kompensiert, sodass die landwirtschaftliche Maschine dann der vorbestimmten Linie am Hang sicher zu folgen vermag.

Es ist auch bekannt, Entlastungsdruck durch mechanische Federn zu erzeugen, oder hydraulisch durch einen zweistufigen Hydraulikzylinder, der jedoch aufwändig und schwer und unzweckmäßig groß ist.

Der Erfindung liegt die Aufgabe zugrunde, eine landwirtschaftliche Maschine der eingangs genannten Art anzugeben, bei der für besseres Fahrverhalten der Entlastungsdruck auf baulich einfache und kostengünstige und betriebssichere Weise generierbar ist.

Die gestellte Aufgabe wird mit den Merkmalen des Anspruchs 1 gelöst.

Da der Hydraulikschaltkreis der beiden Vorgewendestufen der Hydraulikzylinder so ausgebildet ist, dass bei Einzelaushub oder auch bei beiden in Arbeitsstellung befindlichen Werkzeugen der Entlastungsdruck automatisch, d.h. ohne Steuereingriff von außen, generiert wird, ergeben sich bei kostengünstigem und betriebssicherem Aufbau selbsttätig Kraftverhältnisse, die bei Einzelaushub ein kippstabiles Fahren der landwirtschaftlichen Maschine gewährleisten und sogar in Arbeitsstellung beider Werkzeuge deren Bodenauflagedruck reduzieren, was auf weichem, nassem oder sumpfigem Boden vorteilhaft ist. Der Entlastungsdruck ist begrenzt und kann unabhängig von der Geländekontur den Grenzwert nicht übersteigen, sondern sich bei einer Konturanpassung gegebenenfalls vorübergehend etwas verringern. Die Entlastung verlagert Gewichtskraft von den Bodenlaufrädern der Werkzeuge zu dem Hauptfahrwerk des Tragrahmens, meist einem Starrachs-Fahrwerk, und verbessert sowohl bei Einzelaushub als auch bei beiden Werkzeugen in Arbeitsstellung die Fahreigenschaften der landwirtschaftlichen Maschine am Hang. Der Hydraulikschaltkreis passt sich ohne Einfluss von außen selbsttätig an die jeweilige Betriebssituation an, um den gewünschten Entlastungsdruck automatisch zu erzeugen und für die Landmaschine ein sicheres Fahrverhalten zu gewährleisten. Dabei wird bei jeweils einem Druckregelventil in der Arbeitsleitung das Druckregelventil durch eine Einstellfeder zu einer Sperrstellung und durch aus der Zylinderkammer abgeleiteten Steuerdruck gegen die Einstellfeder zu einer Durchgangsstellung belastet, damit es bei einem Druckanstieg über die Druckgrenze öffnet. Ferner wird das Druckregelventil durch eine Leitungsschleife umgangen, in der ein in der Abströmrichtung aus der Zylinderkammer sperrendes Rückschlagventil angeordnet ist. Dadurch nimmt das Druckregelventil nur beim Regeln des Entlastungsdrucks Einfluss, wohingegen es zum Einzelaushub des Werkzeugs ohne unzweckmäßige Drosselverluste umgangen wird. Jedes Wegeventil ist ein 3/2-Wege-Magnetventil, beispielsweise betätigt durch einen Schwarz/Weiß-Magneten. Ein zu einem Mengenteiler weisender Anschluss des Wegeventils ist über die Arbeitsleitung an einen Anschluss des Mengenteilers angeschlossen. Beide Arbeitsleitungen können zwischen dem Mengenteiler und den Wegeventilen über einen Bypass kommunizieren, der, zweckmäßig, eine Blende enthält. Die Arbeitsleitung zum Hydraulikzylinder ist an einem weiteren von zwei zum Druckregelventil weisenden Anschlüssen des Wegeventils angeschlossen, während ein Bypass ausgehend von der jeweiligen Arbeitsleitung an den zweiten zum Druckregelventil weisenden Anschluss des Wegeventils in der anderen Arbeitsleitung angeschlossen ist. Diese Verschaltung resultiert in einem einfachen und funktionssicheren Hydraulikschaltkreis der beiden Hydraulikzylinder. Außerdem werden bei einem Einzelaushub beide Ausgänge des Mengenteilers auf die Zylinderkammer des aushebenden Hydraulikzylinders gebracht, woraus wünschenswert eine hohe Aushebegeschwindigkeit resultiert.

Einfach wirkende Hydraulikzylinder, insbesondere Zugzylinder, bedeuten weiterhin verringerten Aufwand, da nur eine Zylinderkammer angeschlossen zu werden braucht. Um ein besseres Schluckverhalten bei Druckschwankungen oder Druckstößen und ein Langzeit-Halten des Entlastungsdrucks sicherzustellen, ist es zweckmäßig, zwischen jedem Druckregelventil und der Zylinderkammer eine vorgespannte Druckspeicherblase über eine Drosselblende anzuschließen. Diese wird beispielsweise durch Stickstoff mit einem Druck vorgespannt, der etwa 10 bar unterhalb des gewünschten Entlastungsdrucks liegen kann.

Der Entlastungsdruck wird zweckmäßig auf etwa 30 bis 50 bar, gegebenenfalls bis etwa 60 bar, eingestellt, vorzugsweise um etwa 40 bar, und überschreitet beim Arbeiten der landwirtschaftlichen Maschine diese Druckgrenze nicht oder nicht nennenswert.

Das Steuergerät, das an eine Druckversorgung und einen Tank angeschlossen ist, kann das sogenannte Schlepper-Steuergerät sein, so dass die Funktionen des Einzelaushubs und dergleichen vom Schlepper aus steuerbar sind. Beim Steuergerät kann es sich um ein MehrWegeventil, vorzugsweise ein 3/3-Wegeventil, zum Beispiel mit Verrastung, handeln, das dann die jeweilige Schaltstellung selbsttätig hält, und entweder magnetbetätigt ist oder manuell geschaltet wird, und zwar zwischen einer Hebestellung entweder für einen über die Wegeventile zum Einzelaushub ausgewählten oder sogar für beide Hydraulikzylinder, einer zum Beispiel absperrenden Haltestellung in der der Hydraulikschaltkreis der Hydraulikzylinder abgesperrt ist, und einer Schwimmstellung, in der die Arbeitsleitungen und gegebenenfalls sogar die Druckversorgung mit dem Tank kommunizieren.

Da der Entlastungsdruck nicht nur bei Einzelaushub zweckmäßig ist, sondern auch in den Arbeitsstellungen beider Werkzeuge Vorteile bietet, lassen sich im Hydraulikschaltkreis beide Hydraulikzylinder bei in ihren Arbeitsstellungen befindlichen Werkzeugen mit in etwa gleichen Entlastungsdrücken beaufschlagen, was beispielsweise in sumpfigem oder feuchtem Gelände günstig ist und auch eine Futterverschmutzung minimiert. Bei Arbeiten in Hanglagen wird so zusätzlich die Seitenabdrift reduziert.

Es ist ferner zweckmäßig, eine gewählte Voreinstellung des Entlastungsdrucks in Abhängigkeit von der Wirklänge der Hubarme zu verändern. Je weiter zum Beispiel das ausgehobene Werkzeug vom Tragerahmen entfernt ist, desto mehr Entlastungsdruck sollte das den Boden berührende Werkzeug erhalten, und umgekehrt.

Anstelle des Mengenteilers können für im Wesentlichen gleiche Funktionen zwei parallele Mengenregelventile oder Drosselblenden in den Arbeitsleitungen verbaut sein.

Anhand der Zeichnung werden Ausführungsformen des Erfindungsgegenstandes erläutert. Es zeigen:
- Fig. 1: eine schematische Perspektivansicht einer landwirtschaftlichen Maschine,
- Fig. 2: ein Blockschaltbild eines Hydraulikkreises und eine Hydraulikschaltung entsprechend der Erfindung, passend zu der landwirtschaftlichen Maschine von Fig. 1, bei einem Einzelaushub eines Werkzeugs,
- Fig. 3: ein Blockschaltbild der Arbeitsstellung zweier Werkzeuge bei deren gleichzeitiger Entlastung entsprechend der Erfindung,
- Fig. 4: eine weitere Ausführungsform, die nicht Teil der Erfindung ist, eines Hydraulikschaltkreises der beiden Hydraulikzylinder, und
- Fig. 5: ein Blockschaltbild einer weiteren Ausführungsform, die nicht Teil der Erfindung ist, eines Hydraulikschaltkreises der beiden Hydraulikzylinder, ähnlich dem von Fig. 4.

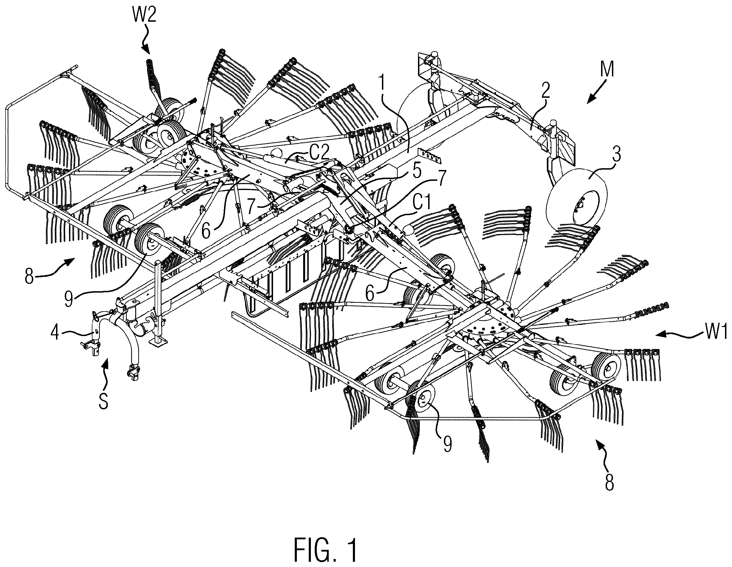

Fig. 1 zeigt eine Schemadraufsicht einer landwirtschaftlichen Maschine M, am nicht-beschränkenden Beispiel eines Kreiselschwaders, mit zwei Werkzeuge W1, W2 einer Werkzeuggruppe, zum Beispiel Rechkreiseln 8.

Die landwirtschaftliche Maschine M ist mit einem längs verlaufenden Tragrahmen 1 ausgebildet, der ein Fahrwerk 2 mit zwei Laufrädern 3 (typischerweise zum Beispiel Starrachs-Laufrädern) aufweist, und über eine Kopplung 4 an einen Schlepper S ankuppelbar ist. Im gezeigten Ausführungsbeispiel sind am Tragrahmen 1 die beiden Werkzeuge W1, W2 der Werkzeuggruppe an voneinander abgewandten Seiten des Tragrahmens 1 über daran angelenkte, hier zum Beispiel schwenkbare Hubarme 6 so angeschlossen, dass sie sich in Bezug auf die Längsmittelebene des Tragrahmens 1 gegenüberliegen. Jeder Hubarm 6 ist um eine annähernd parallel zum Tragrahmen 1 orientierte Schwenkachse 7 schwenkbar. Der Hubarm 6 kann unter anderem zur Änderung der Wirklänge mit wenigstens einem Stelltrieb längenverstellbar und/oder knickbar sein. Ferner können über die Tragrahmens verteilt mehrere Werkzeuggruppen mit jeweils zwei sich gegenüberliegenden Werkzeugen verbaut sein.

Für jeden Hubarm 6 ist zumindest ein Hydraulikzylinder C1, C2 zwischen dem Tragrahmen 1 und dem Hubarm 6 verbaut, mit welchen das Werkzeug aus der in Fig. 1 gezeigten Arbeitsstellung in eine nicht gezeigte, etwas angehobene Vorgewendestellung aushebbar ist (der sogenannte Einzelaushub). Weitere, nicht näher hervorgehobene Stelltriebe, beispielsweise Hydraulikzylinder, können vorgesehen sein, um die Werkzeuge in eine ausgehobene und zusammengeklappte oder zusammengeführte Transportstellung (nicht gezeigt) überführen zu können. Die Schwenkachsen 7 sind zum Beispiel an Konsolen 5 am Tragrahmen 1 so angeordnet, dass sie seitliche Abstände vom Tragrahmen 1 haben. Der Hydraulikzylinder C2 ist dem in Fahrtrichtung rechten Werkzeug W1 zugeordnet, während der in Fahrtrichtung linke Hydraulikzylinder C1 dem in Fahrtrichtung linken Werkzeug W2 zugeordnet ist. Die Werkzeuge W1, W2 können angetrieben sein, worauf hier nicht näher eingegangen wird, und besitzen Bodenlaufräder 8, die zum Beispiel nachlaufend sind.

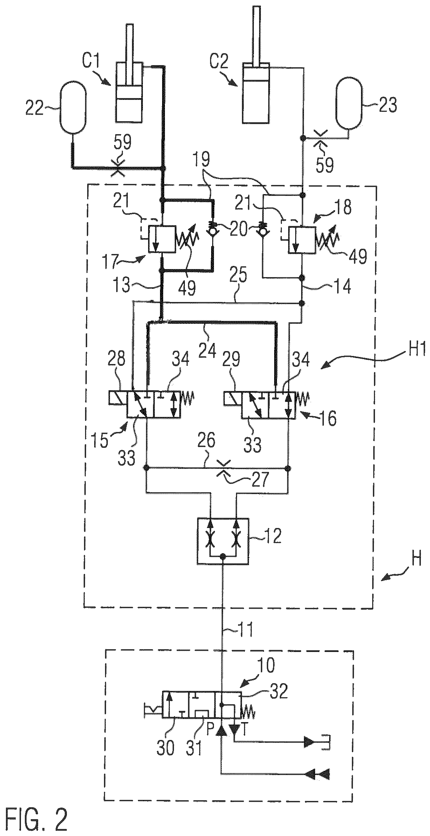

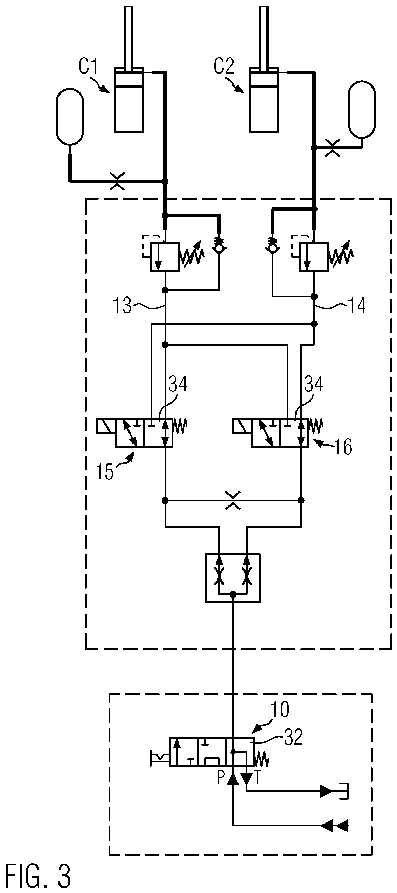

Die landwirtschaftliche Maschine M der Fig. 1 weist eine Hydraulikschaltung H beispielsweise gemäß Fig. 2 und Fig. 3 auf, die aus einem schlepperseitigen Teil und einem Hydraulikschaltkreis H1 nur für die Hydraulikzylinder C1, C2 besteht, und die beispielsweise über eine nicht dargestellte Schnellkupplung in einer Leitung 11 (Fig 2) verbunden sind.

Gemäß Fig. 2 und Fig. 3 ist beispielsweise im schlepperseitigen Teil der Hydraulikschaltung H ein Steuergerät 10 vorgesehen, beispielsweise ein 3/3-Wegeventil zum Beispiel mit Verrastung und (nicht dargestellt) entweder Magnetbetätigung oder mechanischer Betätigung. Das Steuergerät 10 ist an eine Druckversorgung P und einen Tank T angeschlossen und im gezeigten Ausführungsbeispiel zwischen drei Schaltstellungen 30, 31, 32 umstellbar. Die Schaltstellung 30 ist eine Hebestellung, in der entweder beide Hydraulikzylinder C1, C2 oder nur ein Hydraulikzylinder C1 oder C2 beispielsweise aus der Arbeitsstellung des Werkzeugs W1, W2 in die Vorgewendestellung aushebbar sind beziehungsweise ist. In einer abgesperrten Haltestellung 31 ist der Hydraulikschaltkreis H1 vom Steuergerät 10 getrennt, während zum Beispiel die Druckversorgung P mit dem Tank T verbunden wird. Ferner ist eine Schwimmstellung 32 einstellbar, in der der Hydraulikschaltkreis H1 und die Druckversorgung P an den Tank T angeschlossen sind. Das dargestellte Steuergerät 10 ist nur eine nicht beschränkende Möglichkeit unterschiedlicher Wegeventile, wie diese in dieser Technik eingesetzt werden. Vom Steuergerät 10 führt eine Leitung 11 hier zu einem Mengenteiler 12 des Hydraulikschaltkreises H1, dessen beide Anschlüsse mit Arbeitsleitungen 13, 14 zu jeweils einer Zylinderkammer jedes Zylinders C1, C2 verbunden sind. Der Mengenteiler 12 könnte auch beim Steuergerät 10 außerhalb des Hydraulikschaltkreises H1 verbaut sein. Alternativ zum Mengenteiler 12 können zwei Stromregelventile, oder Drosselblenden in den Arbeitsleitungen 13, 14 montiert sein, um ein gleichmäßiges Ausheben der Werkzeuge W1, W2 zu gewährleisten.

In den Arbeitsleitungen 13, 14 sind Wegeventile 15, 16 enthalten, erfindungsgemäß 3/2-Wege-Magnetventile. Diese sind jeweils zwischen zwei Schaltstellungen 33, 34 zum Beispiel durch einen Schwarz/Weiß-Magneten 28, 29 betätigbar.

Zwischen jedem Wegeventil 15, 16 und der Zylinderkammer des Hydraulikzylinders C1, C2 ist ein Druckregelventil 17, 18 verbaut, das durch eine Leitungsschleife 19 umgangen wird, die ein in Abströmrichtung aus der Zylinderkammer sperrendes Rückschlagventil 20 enthält. Das Druckregelventil 17, 18 wird durch eine Einstellfeder 49 in Richtung zu einer Sperrstellung beaufschlagt, und aus einer Vorsteuerleitung 21 mit Vorsteuerdruck aus der Zylinderkammer gegen die Einstellfeder 49 zu einer Durchgangsstellung beaufschlagt. Zwischen den Druckregelventilen 17, 18 und den Zylinderkammern ist an jede Arbeitsleitung 13, 14 eine Druckspeicherblase 22, 23 angeschlossen, die beispielsweise durch Stickstoff mit einem vorbestimmten Druck vorgespannt ist. Je eine zugeordnete Drosselblende 59 stellt sicher, dass sich der Hubarm 6, zum Beispiel beim Einzelaushub, ohne Verzögerung in Bewegung setzt, und nicht Zeit durch Befüllen der Druckspeicherblasen 22, 23 vergeudet wird. Von jeder Arbeitsleitung 13, 14 zweigt ein Bypass 24, 25 zum Wegeventil 15, 16 in der jeweils anderen Arbeitsleitung ab. Die Arbeitsleitungen 13, 14 sind hier ferner zwischen den Wegeventilen 15, 16 und dem Mengenteiler 12 zum Beispiel durch einen Bypass 26 mit einer Blende 27 verbunden. Im Fall in der Wirklänge verstellbarer Hubarme 6 könnte ein Mechanismus vorgesehen sein, der die Wirklänge abgreift und die Einstellfedern 49 stärker oder schwächer einstellt, um den vorgewählten Entlastungsdruck entsprechend zu ändern.

Vereinfachte Schaltungen kommen ohne Mengenteiler 12 und Wegeventile 15, 16 aus, wenn der Schlepper über zwei freie Steuergeräte 10 verfügt und diese dann direkt mit den Arbeitsleitungen 13 und 14 verbunden werden (nicht gezeigt).

Der Hydraulikschaltkreis H1 in Fig. 2 ist in einer Betriebssituation dargestellt, in der der linke Hydraulikzylinder C1 in die ausgehobene Vorgewendestellung gestellt ist, hingegen der rechte Hydraulikzylinder C2 eine Stellung entsprechend der Arbeitsstellung einnimmt und mit einem Entlastungsdruck beaufschlagt ist, der durch das jeweilige Druckregelventil, hier das Druckregelventil 18 geregelt und eingehalten wird. Der höhere Beaufschlagungsdruck für den linken Hydraulikzylinder C1 ist durch verdickte Linien angedeutet und herrscht in dem Bypass 24 und der Arbeitsleitung 13, während der auf einen vorbestimmten Wert, zum Beispiel zwischen etwa 30 bis 50 bar, vorzugsweise etwa 40 bar, begrenzte Entlastungsdruck durch weniger dicke Linien zwischen dem Hydraulikzylinder C2 und dem Druckregelventil 18 angedeutet ist, wobei das Rückschlagventil 20 sperrt und über das Druckregelventil 18 der begrenzte Entlastungsdruck gehalten wird.

Um den linken Hydraulikzylinder C1 in die Vorgewendestellung (Einzelaushub) zu bringen, wurde das Wegeventil 16 geschaltet, und zwar in die Schaltstellung 33, während das Steuergerät 10 in die Hebestellung 30 gestellt war, bis der linke Hydraulikzylinder C1 die dargestellte Vorgewendestellung erreicht hat. Dann wird das Steuergerät 10 in die abgesperrte Haltestellung 31 umgestellt. Der Entlastungsdruck am rechten Hydraulikzylinder C2 bleibt auf dem gewählten Wert eingestellt und verhindert eine Kippsituation der landwirtschaftlichen Maschine bei Fahrten an einer Hanglinie bei einem ausgehobenen Werkzeug, zum Beispiel dem talseitigen.

Bei in die Vorgewendestellung gestelltem Hydraulikzylinder C1 und in Arbeitsstellung befindlichem Hydraulikzylinder C2 ist das Wegeventil 16 in der Schaltstellung 34 und das Wegeventil 15 in der Schaltstellung 33, so dass die Arbeitsleitung 15 und der Bypass 24 abgesperrt sind.

Sind beispielsweise in Fig. 2 (nicht gezeigt) beide Hydraulikzylinder C1, C2 in der Vorgewendestellung (analog wie in Fig. 2 der linke Hydraulikzylinder C1), und soll nur der rechte Hydraulikzylinder C2 den Hubarm 6 zur Arbeitsstellung absinken lassen, dann werden beispielsweise das Wegeventil 15 in die in Fig. 2 gezeigte Schaltstellung 33 geschaltet und das Steuergerät 10 in die Schwimmstellung 32 gestellt, so dass unter dem Gewicht des Werkzeugs W2 Druckmittel über das Druckregelventil 18, die Arbeitsleitung 14 und den Bypass 25, das Wegeventil 15 und den Mengenteiler 12 zum Tank ausgeschoben wird, jedoch nur bis zum Erreichen des vorgewählten Entlastungsdrucks, bei welchem das Druckregelventil 18 absperrt.

Fig. 3 verdeutlicht eine Betriebssituation, bei der beide Hydraulikzylinder C1, C2 in der Arbeitsstellung sind und jeweils individuell mit Entlastungsdruck (durch verdickte Linien angedeutet) beaufschlagt sind. Das Steuergerät 10 ist in die gezeigte Schwimmstellung 32 gestellt, so dass der Entlastungsdruck an jedem Druckregelventil bei zum Beispiel 40 bar gehalten wird, und unabhängig von der Geländekontur diesen Wert nicht übersteigt. Allenfalls kann sich der Entlastungsdruck bei einer Konturanpassung geringfügig zum Beispiel in den Tank T abbauen. Der Entlastungsdruck beider Hydraulikzylinder C1, C2 verlagert Gewichtskraft von den Bodenlaufrädern 9 der Werkzeuge W1 (Nachlaufräder) über den Tragrahmen 1 zum Starrachs-Fahrwerk 2, 3 und stabilisiert so die Fahreigenschaften am Hang. Außerdem werden beispielsweise bei feuchten Bodenverhältnissen zumindest die Bodenlaufräder der Werkzeuge W1, W2 entlastet und wird eine Futterverschmutzung reduziert oder vermieden.

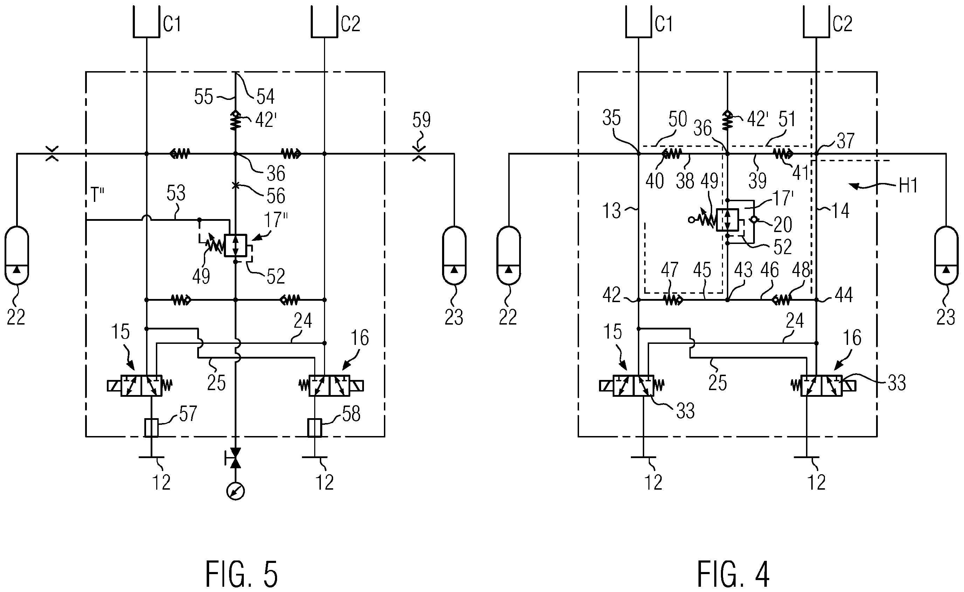

Die einfache Ausführungsform des Hydraulikschaltkreises H1 in Fig. 4 weist nur ein einziges Druckregelventil 17' auf, das durch die Einstellfeder 49 zu einer Offenstellung belastet und durch Vorsteuerdruck aus der Vorsteuerleitung 52 von einem Knoten 43 her gegen die Einstellfeder 49 zu einer Sperrstellung verlagerbar ist. Zwischen den Arbeitsleitungen 13, 14 sind zwischen Knoten 35, 37 und einem mittleren Knoten 36 Leitungen 38, 39 verbaut, die paarweise gegensinnige Rückschlagventile 40, 41 enthalten, wobei das Rückschlagventil 40 in Abströmrichtung aus dem Hydraulikzylinder C1 öffnet, wie auch das Rückschlagventil 41 in Abströmrichtung aus der Zylinderkammer Hydraulikzylinders C2. Von Knoten 42, 44 in den Arbeitsleitungen 13, 14 führen ferner Leitungen 45, 46 zu einem mittleren Knoten 43. Die Leitungen 45, 46 enthalten ebenfalls paarweise gegensinnig verschaltete Rückschlagventile 47, 48. Das Rückschlagventil 47 sperrt in Abströmrichtung aus dem Hydraulikzylinder C1. Das Rückschlagventil 48 sperrt in Abströmrichtung aus dem Hydraulikzylinder C2. Das Druckregelventil 17' ist zwischen den Knoten 43, 36 verbaut und wird vom Rückschlagventil 20 umgangen. Das Leitungssystem bildet auf diese Weise zwei einander kreuzende Bypässe 50, 51, wobei der Bypass 50 gepunktet und der Bypass 51 gestrichelt angedeutet sind.

Wird bei Einzelaushub der linke Hydraulikzylinder C1 in die Vorgewendestellung verstellt, so wird zunächst das Wegeventil 16 in die Schaltstellung 33 geschaltet, so dass beide Ausgänge des Mengenteilers 12 in die Arbeitsleitung 13 zusammengeführt werden. Das Wegeventil 15 befindet sich in der gezeigten Schaltstellung 33. Über den Bypass 50 und das Rückschlagventil 40 wird aus dem Beaufschlagungsdruck des Hydraulikzylinders C1 der Entlastungsdruck für den Hydraulikzylinder C2 abgeleitet, und über die Leitung 46 und das Rückschlagventil 48 am Knoten 44 in die Arbeitsleitung 14 eingespeist, die am Wegeventil 16 abgesperrt ist. Der Entlastungsdruck wirkt auch in der Druckspeicherblase 23. Dabei ist das Steuergerät 10 in die abgesperrte Haltestellung 31 gestellt.

Um den rechten Hydraulikzylinder C2 (Einzelaushub) in die Vorgewendestellung zu stellen, wird der Hydraulikschaltkreis H1 umgekehrt betätigt.

Die Ausführungsform des Hydraulikschaltkreises H1 in Fig. 5 unterscheidet sich von der der Fig. 4 dadurch, dass das Druckregelventil 17' beispielsweise an der Seite der Einstellfeder 49 und über eine Leckageleitung 53 mit einem Tankanschluss T' des Hydraulikschaltkreises H verbunden ist, und über ein Rückschlagventil 42' eine Leitung 55 zu einem Einspeiseanschluss 54 führt, an dem Druckmittel zugeführt werden kann, um ein kontrolliertes Befüllen/Nachfüllen beider Speicherblasen und Einstellen der Entlastungsdrücke für beide Hydraulikzylinder C1, C2 vornehmen zu können. Beim Einspeisen werden zweckmäßig Anschlüsse 57, 58 zwischen den Wegeventilen 15, 16 und dem Mengenteiler 12 vorübergehend abgesperrt. Die Funktion bei Einzelaushub ist gleich wie in der Ausführungsform der Fig. 4.

Der jeweilige Hydraulikschaltkreis H1, der sozusagen autark den beiden Hydraulikzylindern C1, C2 zugeordnet ist, erzeugt automatisch sowohl bei Einzelaushub als auch in den Arbeitsstellungen beider Hydraulikzylinder C1, C2, den jeweils nach oben begrenzten Entlastungsdruck ohne Steuereingriff von außen, was das Fahrverhalten der landwirtschaftlichen Maschine beispielsweise am Hang stabilisiert und zu einer besseren Seitenführung gegen Abdriften führt.

Die Voreinstellung des Entlastungsdrucks für die Hydraulikzylinder C1, C2 kann (nicht gezeigt) zum Beispiel dadurch in Abhängigkeit von der gegebenenfalls variablen Wirklänge der Hubarme 6 geändert werden, zum Beispiel über einen Mechanismus, der die Einstellfeder 49 am jeweiligen Druckregelventil 17, 18 in den Fig 2, 3 stärker oder schwächer einstellt. Je weiter das Werkzeug W1, W2 vom Tragrahmen 1 entfernt ist, desto höher kann zum Beispiel der Entlastungsdruck sein, und umgekehrt.

Die landwirtschaftliche Maschine M wurde anhand des nicht beschränkenden Beispiels eines Kreiselschwaders beschrieben. Auch andere landwirtschaftliche Maschinen mit einzeln aushebbaren Werkzeugen können das Konzept der Hydraulikschaltkreise H1 nutzen.

## Patentansprüche

1. Landwirtschaftliche Maschine (M), insbesondere Kreiselschwader, - mit einem ein Fahrwerk (2, 3) aufweisenden, an einen Schlepper (S) ankuppelbaren Tragrahmen (1) für zumindest eine Werkzeuggruppe, die auf Bodenlaufrädern (9) abstützbare Werkzeuge (W1, W2) an an gegenüberliegenden Seiten des Tragrahmens (1) schwenkbar angelenkten Hubarmen (6) aufweist, vorzugsweise antreibbare Rechkreisel (8), wobei die landwirtschaftliche Maschine (M) die Hubarmen (6) aufweist, und zwischen dem Tragrahmen (1) und jedem Hubarm (6) mindestens ein Hydraulikzylinder (C1, C2) aufweist, mit dem bei einem Einzelaushub ein Werkzeug (W1, W2) zumindest aus einer Arbeitsstellung auf dem Boden in eine Vorgewendestellung aushebbar ist, und - mit einer Hydraulikschaltung (H), in welcher mittels wenigstens eines Steuergeräts (10) die Hydraulikzylinder (C1, C2) in einem diesen zugeordneten Hydraulikschaltkreis (H1) betätigbar sind, wobei der Hydraulikschaltkreis (H1) der beiden Hydraulikzylinder (C1, C2) der Werkzeuggruppe derart ausgebildet ist, dass zumindest bei Einzelhub eines Werkzeugs (W1 oder W2) aus der Arbeitsstellung der Hydraulikzylinder (C1, C2) des anderen in Arbeitsstellung verbliebenen Werkzeugs (W2 oder W1) ohne Steuereingriff in den Hydraulikschaltkreis (H1) von außen automatisch hydraulisch mit einem vorbestimmt begrenzten Entlastungsdruck beaufschlagbar ist, wobei die Hydraulikzylinder (C1, C2) einfach wirkend sind, von denen jeder im Hydraulikschaltkreis (H1) mit nur einer Zylinderkammer über eine Arbeitsleitung (13, 14) an ein Wegeventil (15, 16) des Hydraulikschaltkreises (H1) angeschlossen ist wobei in der Arbeitsleitung (13, 14) ein in Abströmrichtung aus der Zylinderkammer den Entlastungsdruck regelndes Druckregelventil (17, 18) des Hydraulikschaltkreises (H1) enthalten ist, dass jedes Wegeventil (15 16) ein Wege-Magnetventil ist, dessen einer zu einem Mengenteiler (12) des Hydraulikschaltkreises (H1) weisender Anschluss über die Arbeitsleitung (13, 14) an einen Anschluss des Mengenteilers (12) angeschlossen ist, wobei beide Arbeitsleitungen (13, 14) zwischen dem Mengenteiler (12) und den Wegeventilen (15, 16) über einen ersten Bypass (26) des Hydraulikschaltkreises (H1) kommunizieren, **dadurch gekennzeichnet, dass** jedes Wegeventil (15, 16) ein 3/2-Wege-Magnetventil ist, dass die jeweilige Arbeitsleitung (13 oder 14) zum Hydraulikzylinder (C1, C2) an einen weiteren von zwei zum Druckregelventil (17, 18) weisenden Anschlüssen des Wegeventils (15, 16) angeschlossen ist, und dass jede Arbeitsleitung (13, 14) über einen weiteren Bypass (24, 25) des Hydraulikschaltkreises (H1) an den zweiten zum Druckregelventil (17, 18) weisenden Anschluss des Wegeventils (15, 16) in der jeweils anderen Arbeitsleitung (13, 14) angeschlossen ist.

2. Landwirtschaftliche Maschine nach Anspruch 1, **dadurch gekennzeichnet, dass** die Hydraulikzylinder (C1, C2) Zugzylinder, sind, wobei, vorzugsweise, zwischen dem Druckregelventil (17, 18) und der Zylinderkammer über eine vorgeschaltete Drosselblende (59) eine vorgespannte Druckspeicherblase (22, 23) angeschlossen ist.

3. Landwirtschaftliche Maschine nach Anspruch 1, **dadurch gekennzeichnet, dass** der Entlastungsdruck des Hydraulikzylinders (C1, C2) auf etwa 30 bis 60 bar, vorzugsweise etwa 40 bar, begrenzt ist, und dass, vorzugsweise, die Vorspannung einer dem Hydraulikzylinder (C1, C2) zugeordneten Druckspeicherblase (22, 23) um etwa 10 bar unterhalb des Entlastungsdrucks liegt.

4. Landwirtschaftliche Maschine nach Anspruch 1, **dadurch gekennzeichnet, dass** das Druckregelventil (17, 18) durch eine, vorzugsweise zum Ändern des Entlastungsdrucks verstellbare, Einstellfeder (49) zu einer Sperrstellung und durch aus der Zylinderkammer abgeleiteten Steuerdruck gegen die Einstellfeder (49) zu einer Durchgangsstellung verstellbar ist, und dass das Druckregelventil (17, 18) durch eine Leitungsschleife (19) umgangen wird, in der ein in Abströmrichtung aus der Zylinderkammer sperrendes Rückschlagventil (20) angeordnet ist.

5. Landwirtschaftliche Maschine nach wenigstens einem der vorhergehenden Ansprüche, **dadurch gekennzeichnet, dass** das wenigstens eine an eine Druckversorgung (P) und einen Tank (T) angeschlossene Steuergerät (10), vorzugsweise ein Schlepper-Steuergerät, ein Mehrwegeventil ist, vorzugsweise ein 3/3-Wegeventil mit manueller oder magnetischer Betätigung und einer Verrastung, das zwischen einer Hebestellung (30), einer absperrenden Haltestellung (31) und einer Schwimmstellung (32) umstellbar ist.

6. Landwirtschaftliche Maschine nach wenigstens einem der vorhergehenden Ansprüche, **dadurch gekennzeichnet, dass** in Arbeitsstellungen beider Werkzeuge (W1, W2) der Werkzeuggruppe beide Hydraulikzylinder (C1, C2) in etwa gleich mit dem Entlastungsdruck beaufschlagbar sind.

7. Landwirtschaftliche Maschine nach Anspruch 3, **dadurch gekennzeichnet, dass** die Voreinstellung des Entlastungsdrucks des Hydraulikzylinders (C1, C2) in Abhängigkeit der Länge der Hubarme (6) veränderlich ist und bei maximaler Länge bis zu 60 bar beträgt.

8. Landwirtschaftliche Maschine nach Anspruch 1, **dadurch gekennzeichnet, dass** der Mengenteiler (12) von zwei parallelen Mengenregelventilen oder Drosselblenden gebildet ist.

## Claims

1. Agricultural machine (M), in particular rotary swather, comprising a carrying frame (1) having an undercarriage to be coupled to a tractor (S), the carrying frame (1) being provided with at least one tool group having tools (W1, W2) supported on ground wheels (9) and being provided at opposite sides of the carrying frame (1) on pivotally linked lifting arms (6), preferably drivable raking rotors (8), wherein the agricultural machine (M) has the lifting arms (6) and at least one hydraulic cylinder (C1, C2) between the carrying frame (1) and each lifting arm (6), by which in case of a single lifting stroke a tool (W1, W2) can be lifted at least from a working position on the ground into an elevated headland position, and with a hydraulic circuit (H) within which the hydraulic cylinders (C1, C2) are actuated by means of at least one control device (10) in a hydraulic circuitry (H1) allocated to the hydraulic cylinders (C1, C2), wherein the hydraulic circuitry (H1) of both hydraulic cylinders (C1, C2) of the tool group is designed such that at least in case of a single stroke of a tool (W1 or W2) out of the working position the hydraulic cylinder (C1, C2) of the other tool (W2 or W1) remaining in the working position is loaded automatically and hydraulically with a predetermined limited relief pressure without a control engagement from outside into the hydraulic circuitry (H1), wherein the hydraulic cylinders (C1, C2) are single acting and each of them is connected in the hydraulic circuitry (H1) with only one cylinder chamber by a working line (13, 14) to a multiway valve (15, 16) of the hydraulic circuitry (H1), wherein in the working line (13, 14) a pressure regulating valve (17, 18) of the hydraulic circuitry (H1) is provided which regulates the relief pressure in flow direction out of the cylinder chamber, wherein each multiway valve (15, 16) is a multiway solenoid valve (15, 16), one port of which facing a flow divider (12) of the hydraulic circuitry is connected via the working line (13, 14) to one port of the flow divider, wherein both working lines (13, 14) communicate via a first bypass (26) of the hydraulic circuitry (H1) provided between the flow divider 12 and the multiway valves (15, 16), **characterized in that** each multiway valve (15, 16) is a 3/2- multiway-solenoid valve, that the respective working line (13, 14) to a hydraulic cylinder (C1, C2) is connected to a further port of two ports of the multiway valve (15, 16) facing to the pressure regulating valve (17, 18), and that each working line (13, 14) is connected via a further bypass (24,25) of the hydraulic circuitry (H1) to the further port of the multiway valve (15, 16) facing the pressure regulating valve (17, 18) in the respective other working line (13, 14).

2. Agricultural machine according to claim 1, **characterized in that** the hydraulic cylinders (C1, C2) are pulling cylinders, wherein, preferably, between the pressure regulating valve (17, 18) and the cylinder chamber a pre-loaded pressure storage (22, 23) is provided and connected via a throttling aperture (59) situated ahead of the pressure storage (22, 23).

3. Agricultural machine according to claim 1, **characterized in that** the relief pressure of the respective hydraulic cylinder (C1, C2) is limited to about 30 to 60 bar, preferably about 40 bar, and that, preferably, the preload of the pressure storage (22, 23) allocated to the respective hydraulic cylinder (C1, C2) is about 10 bar lower than the relief pressure.

4. Agricultural machine according to claim 1, **characterized in that** the pressure regulating valve (17, 18) is adjustable by a setting spring (49) towards a blocking position, the setting spring (49) preferably being adjustable for varying the relief pressure, and by control pressure derived from the cylinder chamber and counter to the setting spring (49) towards a through flow position, and that the pressure regulating valve (17, 18) is deviated by a line loop (19) within which a check valve (20) is arranged blocking in outflow direction out of the cylinder chamber.

5. Agricultural machine according to at least one of the preceding claims, **characterized in that** the at least one control device (10) connected to a pressure supply (P) and a tank (T), preferably a tractor-control device, is a multiway valve, preferably a 3/2- multiway valve having a manual or magnetic actuation and a mechanic latch-mechanism, the control device being adjustable in a lifting position (30), a blocking holding position (31) and a floating position (32).

6. Agricultural machine according to at least one of the preceding claims, **characterized in that** both hydraulic cylinders (C1, C2) are loaded substantially equally by the relief pressure in working positions of both tools (W1, W2) of the tool group.

7. Agricultural machine according to claim 3, **characterized in that** the presetting of the relief pressure of the respective hydraulic cylinder (C1, C2) is variable depending from the longitudinal extension of the lifting arms( 6) and amounts up to 60 bar in case of maximum length of the lifting arms (6).

8. Agricultural machine according to claim 1, **characterized in that** the flow divider (12) is formed by two parallel flow regulating valves or throttling apertures.

## Revendications

1. Machine agricole (M), en particulier andaineuse rotative,
- avec un châssis porteur (1) présentant un mécanisme de roulement (2, 3) et pouvant être accouplé à un tracteur (S) pour au moins un groupe d'outils, qui présente des outils (W1, W2) pouvant s'appuyer sur des roues de roulement au sol (9) sur des bras de levage (6) articulés de manière pivotante sur des côtés opposés du châssis porteur (1), de préférence des râteaux rotatifs (8) pouvant être entraînés, la machine agricole (M) présentant les bras de levage (6), et au moins un vérin hydraulique (C1, C2) étant prévu entre le châssis porteur (1) et chaque bras de levage (6), vérin avec lequel, lors d'un relevage individuel, un outil (W1, W2) peut être relevé au moins d'une position de travail sur le sol dans une position de bout de champ, et
- avec un circuit hydraulique (H), dans lequel les vérins hydrauliques (C1, C2) peuvent être actionnés au moyen d'au moins un appareil de commande (10) dans un circuit hydraulique (H1) qui leur est associé, le circuit hydraulique (H1) des deux vérins hydrauliques (C1, C2) du groupe d'outils étant réalisé de telle sorte, qu'au moins lors de la course individuelle d'un outil (W1 ou W2) à partir de la position de travail, le vérin hydraulique (C1, C2) de l'autre outil (W2 ou W1) resté en position de travail peut être automatiquement sollicité hydrauliquement de l'extérieur avec une pression de décharge limitée prédéterminée, sans intervention de commande dans le circuit hydraulique (H1), les vérins hydrauliques (C1, C2) à simple effet, dont chacun est raccordé dans le circuit hydraulique (H1) avec une seule chambre de cylindre par l'intermédiaire d'une conduite de travail (13, 14) à un distributeur (15, 16) du circuit hydraulique (H1), la conduite de travail (13, 14) contenant une soupape de régulation de pression (17, 18) du circuit hydraulique (H1) régulant la pression de décharge dans le sens d'écoulement hors de la chambre de cylindre, en ce que chaque distributeur (15, 16) est une électrovanne directionnelle dont un raccord orienté vers un diviseur de débit (12) du circuit hydraulique (H1) est raccordé à un raccord du diviseur de débit (12) via la conduite de travail (13, 14), les deux conduites de travail (13, 14) communiquant entre le diviseur de débit (12) et les vannes directionnelles (15, 16) via une première dérivation (26) du circuit hydraulique (H1), **caractérisé en ce que** chaque distributeur (15, 16) est une électrovanne à 3/2 voies, **en ce que** la conduite de travail respective (13 ou 14) vers le vérin hydraulique (C1, C2) est raccordée à un autre des deux raccords du distributeur (15, 16) dirigés vers la soupape de régulation de pression (17, 18), et **en ce que** chaque conduite de travail (13, 14) est raccordée, par l'intermédiaire d'une autre dérivation (24, 25) du circuit hydraulique (H1), au deuxième raccord, orienté vers la soupape de régulation de pression (17, 18), du distributeur (15, 16) dans l'autre conduite de travail respective (13, 14).

2. Machine agricole selon la revendication 1, **caractérisée en ce que** les vérins hydrauliques (C1, C2) sont des vérins de traction, un accumulateur de pression à vessie (22, 23) précontraint étant raccordé, de préférence, entre la soupape de régulation de pression (17, 18) et la chambre de vérin par l'intermédiaire d'un diaphragme d'étranglement (59) monté en amont.

3. Machine agricole selon la revendication 1, **caractérisée en ce que** la pression de décharge du vérin hydraulique (C1, C2) est limitée à environ 30 à 60 bars, de préférence à environ 40 bars, et **en ce que**, de préférence, la précontrainte d'un accumulateur de pression à vessie (22, 23) associée au vérin hydraulique (C1, C2) est inférieure d'environ 10 bars à la pression de décharge.

4. Machine agricole selon la revendication 1, **caractérisée en ce que** la soupape de régulation de pression (17, 18) peut être déplacée vers une position de blocage par un ressort de réglage (49), de préférence réglable pour modifier la pression de décharge, et vers une position de passage par une pression de commande dérivée de la chambre de cylindre contre le ressort de réglage (49), et **en ce que** la soupape de régulation de pression (17, 18) est contournée par une boucle de conduite (19) dans laquelle est disposé un clapet anti-retour (20) verrouillant dans le sens d'écoulement hors de la chambre de cylindre.

5. Machine agricole selon au moins l'une des revendications précédentes, **caractérisée en ce que** ledit au moins un distributeur (10), de préférence un distributeur de tracteur, raccordé à une alimentation en pression (P) et à un réservoir (T), est un distributeur à plusieurs voies, de préférence un distributeur à 3/3 voies à actionnement manuel ou magnétique et à encliquetage, commutable entre une position de levage (30), une position d'arrêt verrouillante (31) et une position flottante (32).

6. Machine agricole selon au moins l'une des revendications précédentes, **caractérisée en ce que**, dans les positions de travail des deux outils (W1, W2) du groupe d'outils, les deux vérins hydrauliques (C1, C2) peuvent être soumis à la pression de décharge de manière sensiblement identique.

7. Machine agricole selon la revendication 3, **caractérisée en ce que** le préréglage de la pression de décharge du vérin hydraulique (C1, C2) est variable en fonction de la longueur des bras de levage (6) et peut aller jusqu'à 60 bars pour la longueur maximale.

8. Machine agricole selon la revendication 1, **caractérisée en ce que** le diviseur de débit (12) est formé de deux vannes de régulation de débit ou de diaphragmes d'étranglement parallèles.
